Europäisches Patentamt

European Patent Office

Office européen des brevets

(11) Veröffentlichungsnummer: **0 241 767**
**B1**

# EUROPÄISCHE PATENTSCHRIFT

(45) Veröffentlichungstag der Patentschrift:
13.06.90

(51) Int. Cl.⁵: **F16D 65/12**, F16D 65/847

(21) Anmeldenummer: 87104289.1

(22) Anmeldetag: 24.03.87

(54) Bremsscheibenvorrichtung.

(30) Priorität: 17.04.86 DE 3612896

(43) Veröffentlichungstag der Anmeldung:
21.10.87 Patentblatt 87/43

(45) Bekanntmachung des Hinweises auf die Patenterteilung:
13.06.90 Patentblatt 90/24

(84) Benannte Vertragsstaaten:
DE ES FR GB IT SE

(56) Entgegenhaltungen:
EP-A- 0 177 672
DE-A- 2 235 627
DE-A- 2 728 335
DE-B- 1 167 374
DE-B- 1 221 664
GB-A- 1 027 686
GB-A- 1 149 126
US-A- 2 284 357

(73) Patentinhaber: Schwäbische Hüttenwerke Gesellschaft
mit beschränkter Haftung,
Wilhelmstrasse 67 Postfach 3280,
D-7080 Aalen-Wasseralfingen(DE)

(72) Erfinder: Metzler, Horst, Am Eichbühl 27,
D-7200 Tuttlingen(DE)
Erfinder: Schwarz, Günther, Galgenweg 14,
D-7200 Tuttlingen 16(DE)

(74) Vertreter: Jackisch, Walter, Dipl.-Ing. et al, Patentanwalt
W. Jackisch & Partner Menzelstrasse 40,
D-7000 Stuttgart 1(DE)

## Beschreibung

Die Erfindung betrifft eine Bremsscheibenvorrichtung und ein Verfahren zur Herstellung einer solchen Bremsscheibenvorrichtung nach dem Oberbegriff der Ansprüche 1 bzw. 8.

Bremsscheibenvorrichtungen dieser Art bestehen aus einer Bremsscheibe mit Bremsringen und einem mit ihr verbundenen Bremsscheibenträger, der am Rad des Kraftfahrzeuges verschraubt ist. Die Bremsringe bilden Reibflächen, gegen die Bremsbeläge beim Abbremsen des Kraftfahrzeuges gepreßt werden.

Um für schwere und schnelle Kraftfahrzeuge, insbesondere Pkw's, eine ausreichende Bremsleistung zu erreichen, müssen die Reibflächen und der Bremsbelag der Bremsringe vergrößert werden. Dies würde im Normalfall zu einer Vergrößerung der Bremsscheibe und damit zu einer Radänderung von z.B. 15 auf 16 Zoll führen. Um dies zu vermeiden, ist der Bremssattel der Bremsscheibe am Innendurchmesser der Bremsscheibe angeordnet (innenumgriffene Bremsscheibe). Dadurch kann die Reibfläche der Bremsscheibe ohne Vergrößerung des Rades bzw. der Radfelge vergrößert werden. Nachteilig ist bei dieser Bremsscheibenanordnung jedoch, daß der üblicherweise verwendete Scheibentopf durch einen Bremsscheibenträger ersetzt werden muß. Dies ist mit einem höheren Herstellungsaufwand verbunden und es besteht das Problem, den Bremsscheibenträger mit der Bremsscheibe sicher und auf wirtschaftliche Weise verbinden zu können. Es ist schon vorgeschlagen worden, in die Bremsscheibe Laschen einzugießen, an die der aus Stahl bestehende Bremsscheibenträger anschließend angeschweißt wird. Die Schweißnähte müssen speziell korrosionsbehandelt, wie entzundert und gebeizt und auf Haarrisse durch thermische Spannungen in aufwendiger Weise überprüft werden. Auch muß die Schweißwurzelausbildung am Übergang von den Laschen zum Bremsscheibenträger einwandfrei ausgebildet sein. Dies erfordert eine genaue und langwierige Schweißung und eine exakte Nachprüfung (vgl beispielsweise die EP-A 177 692).

Der Erfindung liegt die Aufgabe zugrunde, eine Bremsscheibenvorrichtung dieser Art so auszubilden, daß auf konstruktiv einfache und kostengünstige Weise ein sehr sicherer Halt zwischen der Bremsscheibe und dem Bremsscheibenträger gewährleistet ist und die Bremsscheibenvorrichtung kostengünstig hergestellt werden kann.

Diese Aufgabe wird bei der gattungsgemäßen Bremsscheibenvorrichtung erfindungsgemäß mit den kennzeichnenden Merkmalen des Anspruches 1 und beim gattungsgemäßen Verfahren erfindungsgemäß mit den kennzeichnenden Merkmalen des Anspruches 8 gelöst.

Infolge der einstückigen Ausbildung der Verbindungsteile mit dem Bremsscheibenträger entfällt die Herstellung gesonderter Verbindungsteile sowie die gesonderte Verbindung mit dem Bremsscheibenträger. Wegen des Wegfalls der gesonderten Befestigung der Verbindungsteile kann daher ein erheblicher Verfahrensaufwand vermieden und vor allem eine äußerst sichere und haltbare Verbindung zwischen dem Bremsscheibenträger und der Bremsscheibe erreicht werden. Vorteilhaft ist ferner, daß bei der Herstellung der Bremsscheibe, wenn diese erstarrt, der eingegossene Bremsscheibenträger die Schrumpfbewegungen der Bremsscheibe mitmacht. Wenn sich die Bremsscheibe beim Betrieb erwärmt, macht der Bremsscheibenträger die Entspannungsbewegung mit, wobei die beim Erkalten auftretenden Spannungen mindestens teilweise ausgeglichen werden. Daher treten an der erfindungsgemäßen Bremsscheibenvorrichtung keine Verzugserscheinungen auf.

Das erfindungsgemäße Verfahren hat den Vorteil, daß es sehr einfach und kostengünstig durchgeführt werden kann, da die Verbindungsteile nicht gesondert in die Form eingelegt werden müssen. Vielmehr muß nur der Bremsscheibenträger mit dem Kern zusammengesteckt werden, um die Verbindungsteile in die gewünschte Lage zur Form zu bringen.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher erläutert. Es zeigt:

Fig. 1 einen Teil einer Bremsscheibe und eines Bremsscheibenträgers einer erfindungsgemäßen Bremsscheibenvorrichtung in einer Gießform zur Herstellung der Bremsscheibe und zur Verbindung mit dem Bremsscheibenträger,

Fig. 2 in vergrößerter Darstellung einen Schnitt längs der Linie II-II in Fig. 1,

Fig. 3 eine Ansicht in Richtung des Pfeiles III in Fig. 1,

Fig. 4 einen Teil der Bremsscheibe in Seitenansicht gem. Pfeil IV in Fig. 1.

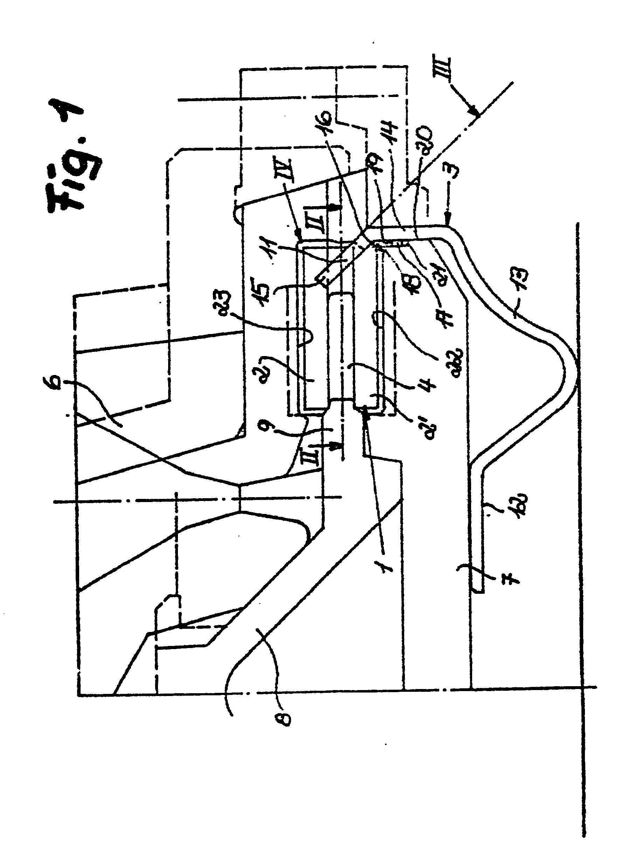

Die Bremsscheibenvorrichtung nach den Fig. 1 bis 4 besteht aus einer Bremsscheibe 1 und einem fest mit ihr verbundenen Bremsscheibenträger 3. Die Bremsscheibe 1 sitzt drehfest auf einer Achse oder Welle eines (nicht dargestellten) Fahrzeugrades und wird innen von (ebenfalls nicht dargestellten) Bremsbacken umgriffen.

Die Bremsscheibe 1 besteht in bekannter Weise aus zwei gleichen, mit axialem Abstand übereinanderliegenden Bremsringen 2 und 2', die über radial verlaufende rippenartige Stege 4, 4' miteinander verbunden sind. Sie haben gleichen umfangsseitigen Abstand voneinander und begrenzen mit den Bremsringen 2 und 2' radial verlaufende Kühlkanäle 5. Die einstückig ausgebildete Bremsscheibe 1 besteht aus Gußeisen und wird mit der in Fig. 1 dargestellten Gießform 6 bis 8 hergestellt. Sie besteht in bekannter Weise aus einem Formoberteil 6, einem Grundkern 7 und einem Kühlkanalkern 8. Er weist eine der Zahl der vorgesehenen Kühlkanäle 5 entsprechende Anzahl von radialen Rippen 9 auf (Fig. 1), die in Umfangsrichtung gleichmäßig verteilt sind.

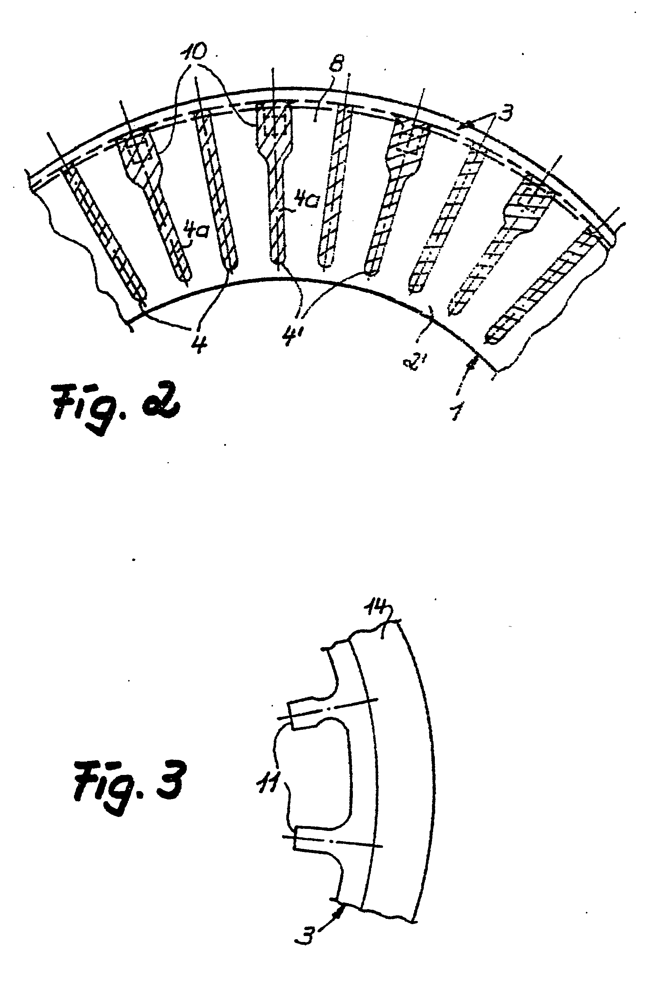

Wie Fig. 2 zeigt, sind die radial äußeren Enden 10 der jeweils übernächsten Stege 4' verbreitert. Vorzugsweise sind die Stegenden 10 etwa doppelt so breit wie die übrigen Stegabschnitte 4a. In die Enden 10 sind stegartige Verbindungsteile 11 (Fig. 3) des Bremsscheibenträgers 3 eingegossen, die beim Gießen der Bremsscheibe 1 in die Lücken zwischen benachbarte Rippen 9 des Kühlkanalkernes ragen.

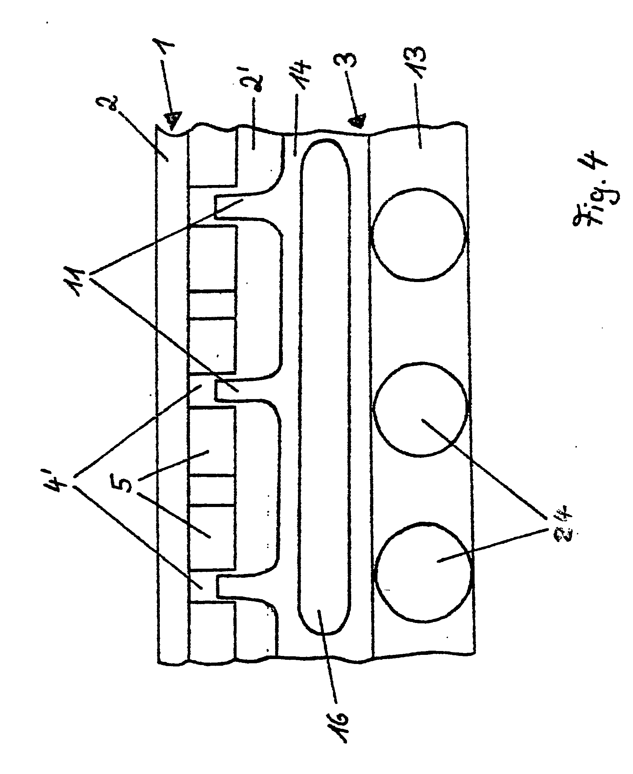

Der Bremsscheibenträger 3 ist napfförmig ausgebildet und besteht vorzugsweise aus Stahlblech. Er weist einen ringscheibenförmigen Befestigungsteil 12 (Fig. 1) auf, mit dem er am Fahrzeugrad verschraubt ist. An den Befestigungsabschnitt 12 schließt ein im Querschnitt etwa V-förmig profilierter Zwischenabschnitt 13 an, der in einen äußeren Zylinderabschnitt 14 übergeht (Fig. 1, 4). Er umgibt den Bremsring 2' über einen Teil seiner Höhe und weist die Verbindungsteile bzw. -stege 11 auf. Der Zwischen- und Zylinderabschnitt 13, 14 hat in Umfangsrichtung mit gleichem Abstand hintereinander angeordnete kreisrunde bzw. längliche Durchbrüche 24 und 16 (Fig. 4), von denen sich die länglichen Durchbrüche 16 in Umfangsrichtung erstrecken.

Die Verbindungsteile 11 sind als schmale, krallenartige Stege ausgebildet, die von dem der Bremsschiebe 1 zugewandten Rand des Zylinderabschnitte 14 radial und schräg verlaufen. Die Verbindungsteile 11 sind über den größten Teil ihrer Länge in die Bremsscheibe 1 eingegossen. Um den Verbindungsteilen 11 einen sicheren Halt zu verleihen, liegen die Verbindungsteile in Höhe der verbreiterten Stegenden 10, durch die sie mit ihren Enden 15 bis in den Bremsring 2 ragen (Fig. 1). Dadurch läßt sich die Bremsscheibe 1 fest mit dem Bremsscheibenträger 3 verbinden. Die Verbindungsteile 11 haben gleichen umfangsseitigen Abstand voneinander, der dem Abstand übernächster Stege 4' der Bremsscheibe 1 entspricht. Dadurch ist nur in jedem übernächsten Steg 4' ein Verbindungsteil 11 eingebettet. Die Verbindungsteile sind schmaler als die Enden 10 der Stege 4' (Fig. 2), aber geringfügig breiter als deren Stegabschnitte 4a. Dadurch wird eine großflächige Verbindung zwischen den Verbindungsteilen und den Stegen 4' erreicht, ohne daß der Durchlaßquerschnitt der Kühlkanäle 5 durch die verbreiterten Stegenden 10 nennenswert verringert ist. Die Kühlkanäle stehen daher nahezu voll zur Kühlung der Bremsscheibe zur Verfügung.

Die Verbindungsteile 11 können selbstverständlich auch in anderer Verteilung längs des Umfanges des Bremsscheibenträgers 3 vorgesehen sein.

Um beim Gießen und gleichzeitigen Verbinden der Bremsscheibe 1 mit dem Bremsscheibenträger 3 ein Anschweißen des Zylinderabschnittes 14 an den Bremsring 2' zu vermeiden, ist zwischen den radial äußeren Rand 18 des Bremsringes 2' und die gegenüberliegende Innenwand 19 des Zylinderabschnittes 14 des Bremsscheibenträgers 3 eine ringförmige Isoliermatte 17 eingelegt. Sie besteht vorzugsweise aus Mineralwolle und hat eine Dicke von etwa 2 mm. Die Isoliermatte 17 ragt von ihrer Einspannstelle 16 aus bis etwa in halbe Höhe des Zylinderabschnittes 14.

Die beschriebene Bremsscheibenanordnung wird in der Gießform 6 bis 8 gegossen. Ihr Grundkern 7 wird im Bremsscheibenträger 3 derart angeordnet, daß er auf dem Befestigungsabschnitt 12 des Bremsscheibenträgers 3 aufliegt und mit seiner Außenseite 20 die Innenwand 19 des Zylinderabschnittes 14 berührt. Die Außenseite 20 weist in ihrer oberen Hälfte eine Aussparung 21 auf, in die die Isoliermatte 17 eingesetzt ist. Die Verbindungsteile 11 des Bremsscheibenträgers 3 ragen in die Gießform in die Zwischenräume zwischen den einander benachbarten Rippen 9 des Kühlkanalkernes 8, wobei die Zwischenräume nach unten und oben durch die Innenseiten 22 und 23 des Grundkernes 7 und des Formoberteiles 6 begrenzt sind. Die Verbindungsteile 11 ragen über mehr als ihre halbe Länge, vorzugsweise über etwa drei Viertel ihrer Länge (Fig. 1) in die Zwischenräume. Wenn die Bremsscheibe 1 in der Form 6 bis 8 gegossen wird, werden die Verbindungsteile 11 einwandfrei vom Gußmaterial der Bremsscheibe umgossen und dadurch der Bremsscheibenträger sicher mit der Bremsscheibe 1 verbunden. Gesonderte nachträgliche Verfahrensschritte, wie Schweißen oder dgl., zum Verbinden des Bremsscheibenträgers 3 mit der Bremsscheibe 1 sind nicht mehr notwendig.

Vorteilhaft ist ferner, daß die Verbindungsteile beim Gießen der Bremsscheibe nur wenig Raum beanspruchen und daher nicht stören.

Die Verbindungsteile 11 können jede beliebige Form haben, die eine feste Verankerung im Gußmaterial der Bremsscheibe 1 gewährleistet. Fig. 3 zeigt zwei verschiedene Beispiele für die Formgestaltung der Verbindungsteile 11. Sie können an ihren Enden verbreitert sein oder über ihre Länge konstante Breite haben. Die Verbindungsteile 11 können auch Durchbrüche aufweisen, so daß das Gußmaterial der Bremsscheibe 1 die Verbindungsteile durchdringt und dadurch eine feste Verbindung zwischen dem Bremsscheibenträger und der Bremsscheibe 1 sichergestellt ist. Die Verbindungsteile müssen nicht bis in den Bremsring 2 reichen, sondern können auch in den Stegenden 10 enden. Die Stege 4' müssen nicht unbedingt verdickte Enden 10 haben, sondern können über ihre ganze Länge gleiche Dicke aufweisen. Die Verbindungsteile 11 können auch senkrecht vom Zylinderabschnitt 14 abstehen.

Die Bremsscheibe 1 muß nicht unbedingt Kühlkanäle 5 aufweisen, sondern kann bei entsprechendem Einsatzfall auch massiv ausgebildet sein.

## Patentansprüche

1. Bremsscheibenvorrichtung für eine innenumgriffene Scheibenbremse eines Kraftfahrzeuges, mit einer gegossenen Bremsscheibe (1) aus zwei die Anlageflächen für die Bremsklötze aufweisenden Bremsringen (2, 2'), zwischen denen durch Stege (4, 4') voneinander getrennte Kühlkanäle (5) vorgesehen sind, und mit einem Bremsscheibenträger (3), der über einstückig mit ihm ausgebildete Verbindungsteile (11) mit der Bremsscheibe (1) verbunden ist, wobei die Verbindungsteile (11) an einem einen Bremsring (2') teilübergreifenden Trägerteilabschnitt (14) zur Bremsscheibe (1) gerichtet angeordnet und unmittelbar im Verbundguß in die Bremsscheibe (1) eingegossen sind, dadurch gekennzeichnet, daß die Verbindungsteile (11) in verbreiterte Endabschnitte (10) der Stege (4') der Bremsscheibe (1) eingebettet sind und zwischen dem Trägerteilabschnitt (14) und dem radial äußeren Rand (18) des Bremsringes (2') eine Isoliermatte (17) eingelegt ist, um ein Anschweißen des Zylinderabscnittes (14) an den Bremsring (2') zu vermeiden.

2. Vorrichtung nach Anspruch 1, dadurch gekennzeichnet, daß die Verbindungsteile (11) kleinere Breite als die Stege (4') haben.

3. Vorrichtung nach Anspruch 1 oder 2, dadurch gekennzeichnet, daß die Verbindungsteile (11) als krallenartige Stege ausgebildet sind.

4. Vorrichtung nach einem der Ansprüche 1 bis 3, dadurch gekennzeichnet, daß die Verbindungsteile (11) schräg nach innen in Richtung auf die Bremsscheibenträgerachse verlaufen.

5. Vorrichtung nach einem der Ansprüche 1 bis 4, dadurch gekennzeichnet, daß die Isoliermatte (17) aus Mineralwolle besteht und vorzugsweise eine Dicke von etwa 2 mm hat.

6. Vorrichtung nach einem der Ansprüche 1 bis 5, dadurch gekennzeichnet, daß die Isoliermatte (17) ausgehend vom Bremsring (2') bis etwa auf die halbe Höhe des Trägerteilabschnittes (14) ragt.

7. Vorrichtung nach einer der Ansprüche 1 bis 6, dadurch gekennzeichnet, daß die Verbindungsteile (11) jeweils gleichen Abstand voneinander aufweisen und in jeweils übernächste Stege (4') eingebettet sind.

8. Verfahren zur Herstellung einer an einen Bremsscheibenträger (3) angegossenen Bremsscheibe (1) für eine innenumgriffene Scheibenbremse eines Kraftfahrzeuges nach den Ansprüchen 1 bis 7, wobei die Bremsscheibe (1) aus zwei die Anlageflächen für die Bremsklötze aufweisenden Bremsringen (2, 2') besteht, zwischen denen durch Stege (4, 4') voneinander getrennte Kühlkanäle (5) vorgesehen sind, und der Bremsscheibenträger (3) mit Verbindungsteilen (11) mit der Bremsscheibe (1) verbunden ist, die an einen Bremsring (2') teilübergreifenden Trägerteilabschnitt (14) angeordnet sind, wobei die Verbindungssteile (11) im Verbundguß unmittelbar in die Bremsscheibe (1) eingegossen werden, wozu die Bremsscheibe (1) in einem Formkern gegossen wird, der aus einem Formoberteil und einem Grundkern besteht, dadurch gekennzeichnet, daß vor dem Gießen der Bremsscheibe (1) der Grundkern (7) in dem Bremsscheibenträger (3) eingesetzt wird, wobei zwischen dem Außenrand (20) des Grundkernes und der Innenwand (19) des Trägerteilabschnittes (14) eine in den Hohlraum des Formkernes ragende Isoliermatte (17) eingelegt wird, und daß der Formkern (6 bis 8) mit dem Bremsscheibenträger (3) zusammengesteckt wird, wobei die Verbindungsteile (11) in den Formkern ragen.

9. Verfahren nach Anspruch 8, dadurch gekennzeichnet, daß die Isoliermatte aus Mineralwolle mit einer Dicke von vorzugsweise 2 mm besteht.

## Claims

1. A brake disc device for an internally gripped disc brake of a motor vehicle, with a cast brake disc (1) consisting of two brake collars (2, 2') having the contact surfaces for the brake shoes, there being provided between said brake collars cooling-air ducts (5) separated from one another by webs (4, 4'), and with a brake disc carrier (3) which is connected to the brake disc (1) by connecting parts (11) formed in one piece with the said brake disc carrier, whereby the connecting parts (11) are arranged pointing towards the brake disc (1), on a section (14) of the carrier part that partly overlaps a brake collar (2'), and are cast integrally into the brake disc (1) directly in the composite casting, characterised in that the connecting parts (11) are fitted into the widened end sections (10) of the webs (4') of the brake disc (1) and an isolating mat (17) is positioned between section (14) of the carrier part and the radially outer edge (18) of the brake collar (2') in order to avoid any welding of the cylindrical section (14) onto the brake collar (2').

2. A device according to claim 1, characterised in that the connecting parts (11) have a smaller width than the webs (4').

3. A device according to claim 1 or 2, characterised in that the connecting parts (11) are designed as claw-like webs.

4. A device according to any one of claims 1 to 3, charaterised in that the connecting parts (11) run diagonally inwards in the direction of the brake disc carrier axle.

5. A device according to any one of claims 1 to 4, characterised in that the isolating mat (17) is made of mineral wool and preferably has a thickness of approximately 2 mm.

6. A device according to any one of claims 1 to 5, characterised in that the isolating mat (17) emerging from the brake collar (2') extends up to about half the height of the section (14) of the carrier part.

7. A device according to any one of claims 1 to 6, characterised in that the connecting parts (11) are each spaced at the same distance from one another and are embedded in every other web (4').

8. A process for the manufacture of a brake disc (1), cast integrally with a brake disc carrier (3), for an internally gripped disc brake of a motor vehicle according to claims 1–7, whereby the brake disc (1) consists of two brake collars (2, 2') having the contact surfaces for the brake shoes, cooling-air ducts (5) separated from one another by webs (4, 4') being provided between said brake collars, and the brake disc carrier (3) with connecting parts (11) is connected to the brake disc (1) said connecting parts being arranged on a section (14) of the carrier part that partly overlaps a brake collar (2'), whereby the connecting parts are cast integrally with the brake disc (1) directly in the composite casting, for which purpose the brake disc (1) is cast in a mould core which consists of a male mould and a base core, characterised in that the base core (7) is inserted in the brake disc carrier (3) before the casting of the brake disc (1), whereby an isolating mat (17) projecting into the cavity of the mould core is placed between the outer wall (20) of the base core and the inner wall (19) of section (14) of the carrier part, and that the mould core (6 to 8) is placed together with the brake disc carrier (3), the connecting parts (11) projecting into the mould core.

9. A process according to claim 8, characterised in that the isolating mat is made from mineral wool with a thickness of preferably 2 mm.

## Revendications

1. Dispositif de freins à disque pour un frein à disque, saisi intérieurement, d'un véhicule à moteur, comportant un disque de frein (1) coulé en deux jantes de freinage (2, 2') présentant des surfaces d'appui pour les plaquettes de frein, entre lesquelles sont ménagés des canaux de refroidissement (5) séparés l'un de l'autre par des entretoises (4, 4') et comportant aussi un support (3) de disques de frein, qui est relié au disque de frein (1) par des parties de liaison (11) constituées d'un seul tenant avec lui, les pièces de liaison (11) étant disposées sur une partie de pièce du support (14) dépassant en partie une jante de frein (2') en étant orientées vers le disque de frein (1) et sont coulées immédiatement dans la fonte composite dans le disque de frein (1), caractérisé en ce que les pièces de liaison (11) sont noyées dans des parties d'extrémités élargies (10) des entretoises (4') du disque de frein (1) et en ce qu'est disposé, entre la partie de pièce support (14) et le bord radialement extérieur (18) de la jante de freinage (2'), un matelas isolant (17) pour éviter une soudure extérieure de la partie de cylindre (14) sur la jante de freinage (2').

2. Dispositif selon la revendication 1, caractérisé en ce que les pièces de liaison (11) sont d'une largeur inférieure aux entretoises (4').

3. Dispositif selon la revendication 1 ou 2, caractérisé en ce que les pièces de liaison (11) présentent une structure d'entretoises en forme de colerette.

4. Dispositif selon l'une des revendications 1 à 3, caractérisé en ce que les pièces de liaison (11) présentent un tracé oblique vers l'intérieur en direction de l'axe de support de disques de frein.

5. Dispositif selon l'une des revendications 1 à 4, caractérisé en ce que le matelas isolant (17) est constitué de laine minérale, de préférence d'une épaisseur d'environ 2 mm.

6. Dispositif selon l'une des revendications 1 à 5, caractérisé en ce que le matelas isolant (17) fait saillie depuis la jante de freinage (2') jusqu'à environ la moitié de la hauteur de la partie de pièce support (14).

7. Dispositif selon l'une des revendications 1 à 6, caractérisé en ce que les pièces de liaison (11) présentent respectivement la même distance entre elles et en ce qu'elles sont noyées dans des entretoises (4') disposées en alternance avec d'autres entretoises.

8. Dispositif de fabrication d'un disque de frein (1) coulé sur un support (3) de disques de frein pour un frein à disque saisi intérieurement d'un véhicule, selon les revendications 1 à 7, le disque de frein (1) se composant de deux jantes de frein (2, 2') présentant des surfaces d'appui pour les plaquettes de frein, jantes entre lesquelles sont disposés des canaux de refroidissement (5) séparés l'un de l'autre par des entretoises (4, 4'), et le support (3) de disque de frein étant relié à des pièces de liaison (11) avec le disque de frein (1) qui sont disposées sur une partie de pièce de support (14) dépassant partiellement au-delà d'une jante de freinage (2'), les pièces de liaison (11) étant coulées immédiatement dans la fonte composite dans le disque de frein (1), le disque de frein (1) étant à cet effet coulé dans un noyau de moule qui se compose d'une pièce supérieure de moule et d'un noyau de fond, caractérisé en ce que, avant la coulée du disque de frein (1), le noyau de fond (7) est introduit dans le support (3) de disque de frein, un matelas isolant (7) en saillie dans l'espace vide du noyau de forme étant installé entre le bord extérieur (20) du noyau de fond et la paroi intérieure (19) de la partie (14) de pièce de support, et en ce que le noyau (6 à 8) est enfoncé en même temps que le support (3) de disque de frein, les pièces de liaison (11) étant en saillie dans le noyau de moule.

9. Procédé selon la revendication 8, caractérisé en ce que le matelas isolant se compose de laine minérale d'une épaisseur de 2 mm de préférence.

Fig. 1

EP 0 241 767 B1

Fig. 2

Fig. 3

Fig. 4